# EUROPEAN PATENT SPECIFICATION

(11) **EP 3 760 371 B1**
(45) Date of publication and mention of the grant of the patent: **11.09.2024**
(21) Application number: 20180440.8
(22) Date of filing: 17.06.2020
(51) Int. Cl.: B23Q 3/08, B23Q 3/10, B23Q 3/18, B25B 11/00, B23Q 1/03

(54) **MACHINE WITH BLOCKING AND RELEASING DEVICE OF PANELS TO BE WORKED AND METHOD OF USE THEREOF**
MASCHINE MIT BRETTSPANN- UND LÖSEVORRICHTUNG SOWIE VERWENDUNG DER MASCHINE
MACHINE AVEC DISPOSITIF DE BLOCAGE ET LIBÉRATION DE PANNEAUX ET MÉTHODE D'UTILISATION DE LA MACHINE

(30) Priority: 04.07.2019 IT 201900010905
(43) Date of publication of application: 06.01.2021
(73) Proprietor: SCM Group S.p.A., 47921 Rimini (RN) (IT)
(72) Inventor: FERRI, Mirko, 47921 Rimini (RN) (IT)
(74) Representative: Tiburzi, Andrea

(56) References cited:
- DE-A1- 102013 104 890
- DE-U1- 202007 009 493
- DE-U1- 202017 001 553
- US-B1- 6 419 216

## Description

The present invention relates to a machine with a blocking and releasing device of panels to be worked and method of use thereof.

### Field of the invention

More specifically, the invention relates to a machine and a method of the type mentioned, studied and realized in particular for coupling at least one device, such as for example a suction cup, to a support panel, such as a sacrificial panel.

In the following the description will refer to the coupling of suction cups to a panel, but it is clear that the same should not be considered limited to this specific use.

### Prior art

As is known, there are currently machines for working wood panels, wooden beams, and the like.

Typically, the panels to be worked are positioned, during the working phases, on one or more suckers, in their turn arranged above a support panel and suitably spaced from each other to support each panel to be worked.

This support panel (called in jargon "sacrificial panel") is positioned on a respective working plane of a working machine.

The description below will refer to the support panel with the expression "sacrificial panel".

Said sacrificial panel, such as an MDF panel ("Medium-Density-Fibreboard"), is usually a breathable panel, possibly equipped with a plurality of small holes.

As said, the presence of one or more suckers on the sacrificial panel allows to support the panel to be worked, keeping it in position and avoiding that the same panel moves during the working phases.

In particular, said suckers are held in position by means of a vacuum condition created below the sacrificial panel.

The suction cups are generally arranged manually on the sacrificial panel by an operator.

One of the main drawbacks of these known solutions consists in the fact that the suckers, after being positioned, can move with respect to the assigned position.

In this case, if the suction cups were accidentally moved from the assigned operating position, following the application of the vacuum for their fixing to the sacrificial panel, there would be a risk, for example in the case of a process that involves drilling the panel placed above said suction cups, to damage the suction cups themselves by means of the working tool.

Furthermore, always in case of accidental incorrect positioning, it is necessary to carry out interventions by the operators, with the consequent downtime. This unavoidably causes an increase in costs for working the panels and the like.

The relevant prior art comprises the patent application US 6419216 B1 and the patent application DE 102013104890 A1. DE 20 2007 009493 U1 discloses a machine with a sacrificial panel.

### Scope of the invention

In light of the above, it is therefore an object of the present invention providing a machine with a blocking and releasing device for panels to be machined which can be coupled to a sacrificial panel, which overcomes the disadvantages of the known systems described above.

Another object of the invention is to provide a method which allows at least one blocking and releasing device to be coupled to a sacrificial panel quickly, effectively and with simple use.

A further object of the invention is to provide a machine with a blocking and releasing device for panels to be worked, which can be removably coupled to a sacrificial panel, and which is blocked, in use, on said sacrificial panel.

Another object of the invention is to provide a machine with a blocking and releasing device for panels to be machined, which can be coupled to a sacrificial panel which is highly reliable, relatively simple to manufacture, and at competitive costs when compared to the prior art.

### Object of the invention

The machine of the invention is defined in claim 1.

In particular, according to the invention, said blocking a releasing device may comprise two pins arranged for orienting said blocking and releasing device on said sacrificial panel.

Further according to the invention, said main body may have a recess communicating with said bearing surface, so that, when said at least one pin is coupled with said at least one opening of said sacrificial panel, said blocking and releasing device is capable of holding said workpiece by means of a vacuum condition generated between said working plane and said sacrificial panel.

Finally, according to the invention, said at least one pin may have a circular or polygonal section.

It is further object of the present invention a method for positioning a blocking and releasing device for a workpiece on a sacrificial panel, wherein said sacrificial panel is arranged on a working plane of a machine for working wood panels and the like, wherein said method comprises the following steps: A. providing at least one blocking and releasing device according to any one of the preceding claims; B. making at least one number of openings on said sacrificial panel corresponding to the number of pins of said blocking and releasing device, wherein said openings have a section compatible with said pins, in correspondence with a predetermined position; and C. placing said at least one blocking and releasing device in correspondence of said at least one number of openings so that, in use, each pin is inserted into a corresponding opening.

In particular according to the invention, said at least one blocking and releasing device may be a suction cup or a vice.

Finally, according to the invention, said sacrificial panel may be breathable, and in that it comprises, after said step C, the following further step: D. creating, between said sacrificial panel and said working plane, a vacuum condition so as to keep in position said workpiece on said at least one suction cup or vice.

### Brief description of the figures

The present invention will be now described, for illustrative but not limitative purposes, according to its preferred embodiments, with particular reference to the figures of the enclosed drawings, wherein:
figure 1 shows a perspective view of a machine comprising a sacrificial panel, on which a plurality of blocking and releasing devices are arranged, according to the method of the present invention;
figure 2 shows a top view of the machine of figure 1;
figure 3 shows, in detail, the coupling of the blocking and releasing device to the sacrificial panel, according to figure 1;
figure 4 illustrates a first perspective view of the blocking and releasing device according to the present invention; and
figure 5 shows a second perspective view of the blocking and releasing device of figure 4.

In the various figures, similar parts will be indicated by the same reference numbers.

### Detailed description

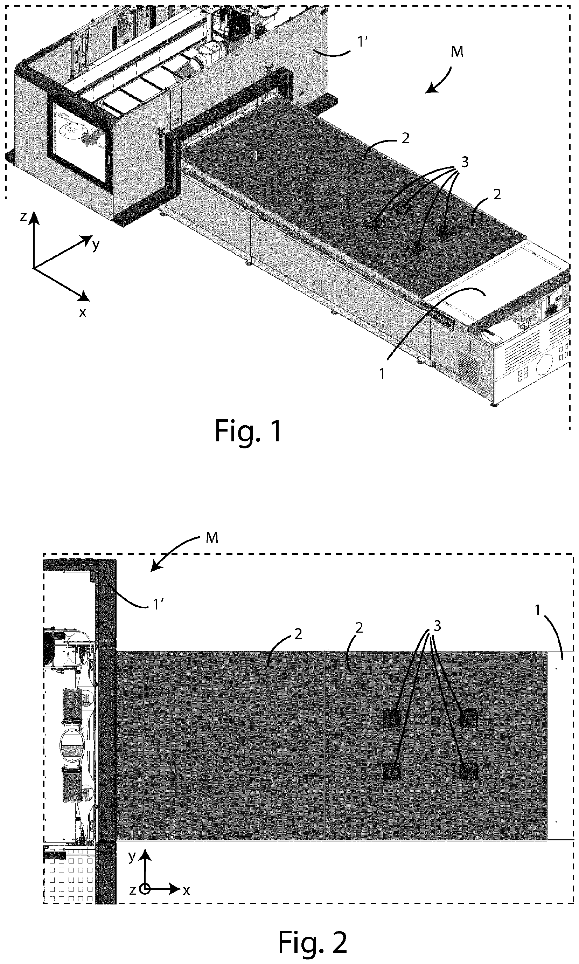

With reference to figures 1 and 2, the machine for working panels and the like, indicated with the reference letter M, substantially comprises a working plane 1, a working bridge 1', movable along the working plane 1, suitably equipped with means for carrying out workings, two sacrificial panels 2, arranged on said working plane 1, and four blocking and releasing devices 3, for fixing the panels to be worked (not shown in the figures).

In particular, the working plane 1 of the machine M according to the present invention preferably develops longitudinally along the direction of the Cartesian axis X. Furthermore, said working plane 1 is configured to support said sacrificial panels 2 during the working phases.

These sacrificial panels 2 are capable of supporting the elements to be worked, such as for example panels, beams and the like, both in case of they are positioned directly on the surface of the sacrificial panels 2, and in case of these elements to be worked are separated from said sacrificial panels 2 by means of said blocking and releasing devices 3, as described below.

As anticipated, in the described embodiment, there are two sacrificial panels 2, however in further embodiments such sacrificial panels 2 can be in a number different from two, for example even one.

Furthermore, as can be seen in figures 1, 2, and 3, there are four blocking and releasing devices 3 arranged on the sacrificial panel 2.

Said blocking and releasing devices 3 are configured for gripping (and subsequently for releasing) the panels to be machined.

In particular, the number of blocking and releasing devices 3 positioned on each sacrificial panel 2 depends on the size of the respective panel to be worked.

By way of example, in the case of small panels to be machined, only one blocking and releasing device 3 can be used.

As said, these blocking and releasing devices 3 allow to retain each panel to be worked during the working phases. In particular, by means of suitable means (not shown), which the machine M is equipped with, a vacuum condition can be created between said working plane 1 and said sacrificial panel 2.

Furthermore, these blocking and releasing devices 3 also allow to release said panel to be worked at the end of the working. In the embodiment described, said blocking and releasing devices are suckers 3. In a further embodiment of the present invention, said blocking and releasing devices 3 can be clamps.

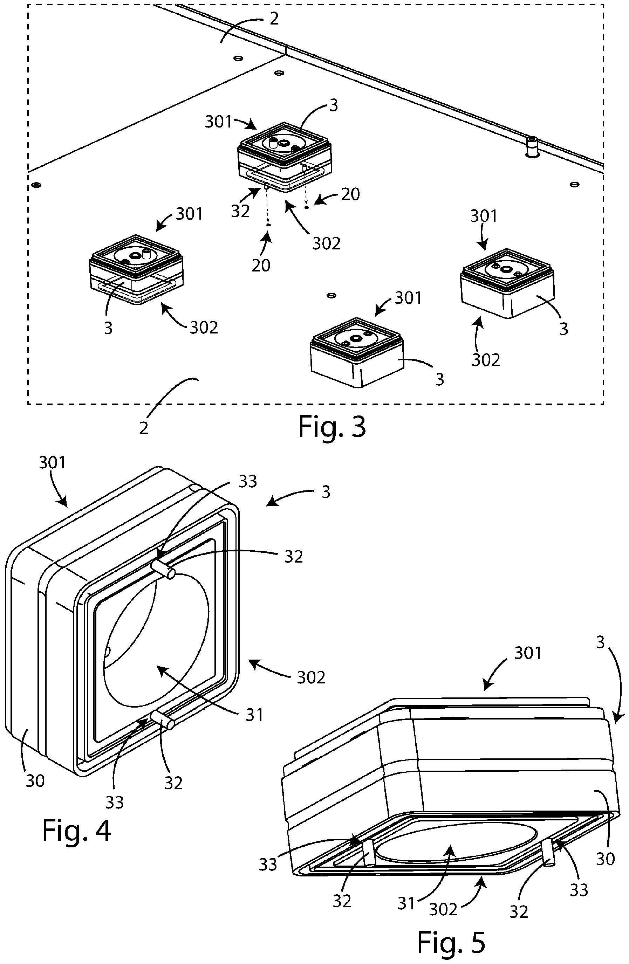

More in detail, as can be seen from figures 4 and 5, said suckers 3 substantially comprise a main body 30 and two pins 32. These pins 32 can be, for example, inserted each in a respective seat 33 obtained in said main body 30. In a further embodiment, said pins 32 can also be made in one piece, or integral with said main body 30.

The main body 30 according to the present invention is hollow and has a square section. However, in further embodiments said main body 30 can have, for example, a circular or rectangular section.

Said main body 30 comprises a bearing surface 301, on which said panel to be worked can rest, and a bearing surface 302, intended to rest on said sacrificial panel 2.

Said main body 30 comprises a cavity 31 communicating with said bearing surface 302, such that, when a vacuum condition is generated between said working plane 1 and said sacrificial panel 2, said sucker 3 is capable of retaining said panel to be worked placed on it.

In the embodiment at issue, said pins 32 have a cylindrical cross section, and, as said, are installed in said respective seats 33 formed on said bearing surface 302. However, in further embodiments, said pins 32 can have, for example, a polygonal section.

In particular, said pins 32 are arranged to orient said blocking and releasing device 3 on said sacrificial panel 2, for example on the basis of the different types of workpiece working.

With particular reference to figure 4, said pins 32 are arranged substantially in the intermediate point of two opposite sides of said bearing surface 302.

More in detail, said pins 32 comprise a first end inserted inside said seats 33, and a second end, opposite the first end, which protrudes from each seat 33 by about 3 millimeters.

The operation and use of said blocking and releasing device 3 is as follows.

As can be seen in particular in figure 3, before positioning the blocking and releasing device 3, i.e. the suction cup 3, two holes or openings 20 are made on the sacrificial panel 2 by means of a working tool, i.e. by means of a tip or a mill included in said machine M. These holes 20 can have a depth of about 4 millimeters.

In this way, the operator can place the blocking and releasing device 3 by inserting each pin 32 into a respective hole 20. As said, said pins 32 can be coupled to respective holes 20 made on said sacrificial panel 2 by suitable processing tools (not shown), included in said machine M.

In fact, said pins 32 of each sucker 3 can be coupled, in use, to respective holes 20 of said sacrificial panel 2 so as to block, during the processing of said panel to be worked, each sucker 3 on said sacrificial panel 2. In particular, said holes 20 have a section compatible with said respective pins 32.

Therefore, the insertion of said pins 32 in said holes 20 on said sacrificial panel 2, be it manual or automatic, allows each sucker 3 to remain in the original position on said sacrificial panel 2, even in case of any accidental stresses caused by operators or additional objects.

The realization of the positioning holes 20 (see figure 3), are carried out, as anticipated, by working tools in predetermined positions. The latter can be chosen by an operator or by means of a logic control unit connected to said machine M.

Of course, different variations can be provided for the shape and positioning of the pins 32.

For example, in a variant of the release blocking device 3 according to the present invention it is possible to provide a single pin 32 having a circular section arranged in the center of the main body 30.

Alternatively, it is possible to provide a single pin 32, arranged in an eccentric position, but having a non-circular section, for example an elongated one. In this case, the machining tool of the machine M will have to make a groove on the sacrificial panel having a shape similar to the aforementioned section of said pin 32.

In a further variant of the blocking and releasing device 3 according to the present invention, it is also possible to provide a plurality of pins 32, for example three pins or four pins, arranged according to the most convenient configurations, aimed at fixing in a more stable manner said blocking and releasing device 3 on the sacrificial panel. Of course, in this case, the machine M will have to make a number of holes 20 corresponding to that of said pins 32.

### Advantages

An advantage of the blocking and releasing device for panels to be machined which can be coupled to a panel according to the present invention is that of allowing a quick, effective and easy-to-use coupling.

Another advantage of the blocking and releasing device for panels to be machined which can be coupled to a panel according to the present invention is that of allowing a removable coupling to a sacrificial panel.

## Claims

1. Machine (M) for working wood panels and the like comprising
a working plane (1),
a sacrificial panel (2) arranged on said working plane (1), and
a blocking and releasing device (3) for a workpiece, to be placed on the sacrificial panel (2), which has at least one opening (20),
wherein said blocking and releasing device (3) comprises a main body (30), having a supporting surface (301), on which said workpiece can be placed, and a bearing surface (302), to be placed on said sacrificial panel (2),
said blocking and releasing device (3) comprising at least one pin (32) arranged on said bearing surface (302), which can be removably inserted into said at least one opening (20) of said sacrificial panel (2), so that, when said pin (32) is inserted into said opening (20), said main body (30) is constrained to said sacrificial panel (2).

2. Machine (M) according to the preceding claim, **characterized**
**in that** said blocking and releasing device (3) comprises two pins (32) arranged for orienting said blocking and releasing device (3) on said sacrificial panel (2).

3. Machine (M) according to any one of the preceding claims, **characterized in that** said main body (30) has a recess (31) communicating with said bearing surface (302), so that, when said at least one pin (32) is coupled with said at least one opening (20) of said sacrificial panel (2), said blocking and releasing device (3) is capable of holding said workpiece by means of a vacuum condition generated between said working plane (1) and said sacrificial panel (2).

4. Machine (M) according to any one of the preceding claims, **characterized in that** said at least one pin (32) has a circular or polygonal section.

5. Method for positioning a blocking and releasing device (3) for a workpiece on a sacrificial panel (2), wherein said sacrificial panel (2) is arranged on a working plane (1) of a machine (M) according to any of the preceding claims, wherein said method comprises the following steps:
A. providing at least one blocking and releasing device (3);
B. making at least one number of openings (20) on said sacrificial panel (2) corresponding to the number of pins (32) of said blocking and releasing device (3), wherein said openings have a section compatible with said pins (32), in correspondence with a predetermined position; and
C. placing said at least one blocking and releasing device (3) in correspondence of said at least one number of openings (20) so that, in use, each pin (32) is inserted into a corresponding opening (20).

6. Method according to the preceding claim, **characterized in that** said at least one blocking and releasing device is a suction cup or a vice (3).

7. Method according to any one of claims 5 or 6, **characterized in that** said sacrificial panel (2) is breathable, and **in that** it comprises, after said step C, the following further step:
D. creating, between said sacrificial panel (2) and said working plane (1), a vacuum condition so as to keep in position said workpiece on said at least one suction cup or vice (3).

## Patentansprüche

1. Maschine (M) zur Bearbeitung von Holzplatten und dergleichen mit einer Bearbeitungsebene (1), eine auf der Arbeitsebene (1)
angeordnete Opferplatte (2), und
eine Blockier- und Freigabevorrichtung (3) für ein Werkstück, das auf der Opferplatte (2) zu platzieren ist, die mindestens eine Öffnung (20) aufweist,
wobei die Blockier- und Freigabevorrichtung (3) einen Hauptkörper (30) mit einer Auflagefläche (301), auf der das Werkstück platziert werden kann, und eine Lagerfläche (302), die auf der Opferplatte (2) zu platzieren ist, umfasst, wobei die Blockier- und Freigabevorrichtung (3) Folgendes umfasst mindestens einen Stift (32), der auf der Auflagefläche (302) angeordnet ist und herausnehmbar in die mindestens eine Öffnung (20) der Opferplatte (2) eingeführt werden kann, so dass, wenn der Stift (32) in die Öffnung (20) eingeführt ist, der Hauptkörper (30) an der Opferplatte (2) festgehalten wird.

2. Maschine (M) nach dem vorhergehenden Anspruch, **dadurch gekennzeichnet, dass** die Blockier- und Freigabevorrichtung (3) zwei Stifte (32) umfasst, die zum Ausrichten der Blockier- und Freigabevorrichtung (3) an der Opferplatte (2) angeordnet sind.

3. Maschine (M) nach einem der vorhergehenden Ansprüche, **dadurch gekennzeichnet, dass** der Hauptkörper (30) eine Aussparung (31) aufweist, die mit der Auflagefläche (302) in Verbindung steht, so dass, wenn der mindestens einen Stift (32) mit der mindestens einen Öffnung (20) der Opferplatte (2) gekoppelt ist, die Blockier- und Freigabevorrichtung (3) in der Lage ist, das Werkstück mittels eines zwischen der Arbeitsebene (1) und der Opferplatte (2) erzeugten Unterdrucks zu halten.

4. Maschine (M) nach einem der vorhergehenden Ansprüche, **dadurch gekennzeichnet, dass** der mindestens einen Stift (32) einen kreisförmigen oder polygonalen Querschnitt aufweist.

5. Verfahren zum Positionieren einer Blockier- und Lösevorrichtung (3) für ein Werkstück auf einer Opferplatte (2), wobei die Opferplatte (2) auf einer Arbeitsebene (1) einer Maschine (M) nach einem der vorhergehenden Ansprüche angeordnet ist, wobei das Verfahren die folgenden Schritte umfasst:
A. Bereitstellen mindestens einer Blockier- und Lösevorrichtung (3);
B. Herstellen von mindestens einer Anzahl von Öffnungen (20) auf der Opferplatte (2), die der Anzahl von Stiften (32) der Blockier- und Freigabevorrichtung (3) entspricht, wobei die Öffnungen einen mit den Stiften (32) kompatiblen Querschnitt in Übereinstimmung mit einer vorbestimmten Position aufweisen; und
C. Anordnen der mindestens einen Blockier- und Freigabevorrichtung (3) in Übereinstimmung mit der mindestens eine Anzahl von Öffnungen (20), so dass bei der Verwendung jeder Stift (32) in eine entsprechende Öffnung (20) eingeführt wird.

6. Verfahren nach dem vorhergehenden Anspruch, **dadurch gekennzeichnet, dass** die mindestens eine Blockier- und Freigabevorrichtung ein Saugnapf oder ein Schraubstock (3) ist.

7. Verfahren nach einem der Ansprüche 5 oder 6, **dadurch gekennzeichnet, dass** die Opferplatte (2) atmungsaktiv ist, und dass es nach dem Schritt C den folgenden weiteren Schritt umfasst:
D. Erzeugen eines Unterdrucks zwischen der Opferplatte (2) und der Arbeitsfläche (1), um das Werkstück auf dem mindestens einen Saugnapf oder Schraubstock (3) in Position zu halten.

## Revendications

1. Machine (M) pour le travail des panneaux de bois et similaires comprenant
un plan de travail (1),
un panneau sacrificiel (2) disposé sur ledit plan de travail (1), et
un dispositif de blocage et de libération (3) d'une pièce à placer sur le panneau sacrificiel (2), qui présente au moins une ouverture (20),
dans lequel ledit dispositif de blocage et de libération (3) comprend un corps principal (30) présentant une surface d'appui (301) sur laquelle la pièce peut être placée, et une surface d'appui (302) à placer sur le panneau sacrificiel (2), ledit dispositif de blocage et de déblocage (3) comprenant au moins une goupille (32) disposée sur ladite surface d'appui (302), qui peut être insérée de manière amovible dans ladite au moins une ouverture (20) dudit panneau sacrificiel (2), de sorte que, lorsque ladite goupille (32) est insérée dans ladite ouverture (20), ledit corps principal (30) est contraint audit panneau sacrificiel (2).

2. Machine (M) selon la revendication précédente, **caractérisée en ce que** ledit dispositif de blocage et de déblocage (3) comprend deux goupilles (32) agencées pour orienter ledit dispositif de blocage et de déblocage (3) sur ledit panneau sacrificiel (2).

3. Machine (M) selon l'une quelconque des revendications précédentes, **caractérisée en ce que** ledit corps principal (30) présente un renfoncement (31) communiquant avec ladite surface d'appui (302), de sorte que, lorsque ladite au moins une goupille (32) est couplée avec ladite au moins une ouverture (20) dudit panneau sacrificiel (2), ledit dispositif de blocage et de libération (3) est en mesure de retenir ladite pièce au moyen d'une condition de vide générée entre ledit plan de travail (1) et ledit panneau sacrificiel (2).

4. Machine (M) selon l'une quelconque des revendications précédentes, **caractérisée en ce que** ladite au moins une broche (32) a une section circulaire ou polygonale.

5. Procédé de positionnement d'un dispositif de blocage et de libération (3) d'une pièce sur un panneau sacrificiel (2), dans lequel ledit panneau sacrificiel (2) est disposé sur un plan de travail (1) d'une machine (M) selon l'une quelconque des revendications précédentes, dans lequel ledit procédé comprend les étapes suivantes:
A. fournir au moins un dispositif de blocage et de déblocage (3);
B. réaliser au moins un nombre d'ouvertures (20) sur ledit panneau sacrificiel (2) correspondant au nombre de goupilles (32) dudit dispositif de blocage et de libération (3), dans lequel lesdites ouvertures ont une section compatible avec lesdites goupilles (32), en correspondance avec une position prédéterminée; et
C. placer ledit au moins un dispositif de blocage et de libération (3) en correspondance avec ledit au moins un nombre d'ouvertures (20) de sorte que, lors de l'utilisation, chaque goupille (32) soit insérée dans une ouverture correspondante (20).

6. Procédé selon la revendication précédente, **caractérisé en ce que** ledit au moins un dispositif de blocage et de libération est une ventouse ou un étau (3).

7. Procédé selon l'une quelconque des revendications 5 ou 6, **caractérisé en ce que** ledit panneau sacrificiel (2) est respirant, et **en ce qu'**il comprend, après ladite étape C, l'étape supplémentaire suivante:
D. créer, entre ledit panneau sacrificiel (2) et ledit plan de travail (1), une condition de vide de façon à maintenir en position ladite pièce sur ladite au moins une ventouse ou étau (3).
